# EUROPEAN PATENT SPECIFICATION

(11) **EP 4 451 365 B1**
(45) Date of publication and mention of the grant of the patent: **14.10.2026**
(21) Application number: 23799594.9
(22) Date of filing: 17.04.2023
(51) Int. Cl.: H01M 4/134, H01M 4/38, H01M 4/36, H01M 4/62, H01M 4/1395, H01M 4/04, H01M 4/66, H01M 10/0525, H01M 4/48, H01M 4/02

(54) **NEGATIVE ELECTRODE FOR LITHIUM SECONDARY BATTERY, METHOD FOR MANUFACTURING NEGATIVE ELECTRODE FOR LITHIUM SECONDARY BATTERY, AND LITHIUM SECONDARY BATTERY COMPRISING NEGATIVE ELECTRODE**
NEGATIVELEKTRODE FÜR LITHIUMSEKUNDÄRBATTERIE, VERFAHREN ZUR HERSTELLUNG EINER NEGATIVELEKTRODE FÜR LITHIUMSEKUNDÄRBATTERIE UND LITHIUMSEKUNDÄRBATTERIE MIT NEGATIVELEKTRODE
ÉLECTRODE NÉGATIVE POUR BATTERIE SECONDAIRE AU LITHIUM, PROCÉDÉ DE FABRICATION D'ÉLECTRODE NÉGATIVE POUR BATTERIE SECONDAIRE AU LITHIUM, ET BATTERIE SECONDAIRE AU LITHIUM COMPRENANT UNE ÉLECTRODE NÉGATIVE

(30) Priority: 03.05.2022 KR 20220054788
(43) Date of publication of application: 23.10.2024
(73) Proprietor: LG Energy Solution, Ltd., Seoul 07335 (KR)
(72) Inventor: KIM, Young Jae, Daejeon 34122 (KR); KIM, Minji, Daejeon 34122 (KR); KWON, Yohan, Daejeon 34122 (KR); LEE, Jaewook, Daejeon 34122 (KR)
(74) Representative: Hoffmann Eitle
(86) International application number: PCT/KR2023/005147
(87) International publication number: WO 2023/214711

(56) References cited:
- EP-A1- 3 893 295
- JP-A- 2010 160 984
- JP-A- 2010 160 984
- JP-A- 2018 142 487
- KR-A- 20050 041 661
- KR-A- 20150 077 053
- KR-A- 20170 127 240
- KR-B1- 102 258 082
- US-A1- 2019 372 118

## Description

### [Technical Field]

The present application relates to a negative electrode for a lithium secondary battery, a method for preparing a negative electrode for a lithium secondary battery, and a lithium secondary battery including the negative electrode.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity by together using a silicon-based compound such as Si/C or SiOx, which has a 10-fold higher capacity than a graphite-based material, as a negative electrode active material. However, the silicon-based compound, which is a high-capacity material, is a material having a high capacity compared to graphite used in the related art, and has excellent capacity characteristics, but the volume rapidly expands during the charging process to disconnect the conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that as surface degradation is accelerated, the performance needs to be improved in terms of battery cycle.

Thus, to solve the above problem when the silicon-based compound is used as a negative electrode active material, various measures such as a measure of adjusting the driving potential, additionally a measure of suppressing the volume expansion itself such as a method of further coating an active material layer with a thin film and a method of controlling the particle diameter of the silicon-based compound, or the development of a binder capable of suppressing the volume expansion of the silicon-based compound to prevent the conductive path from being disconnected have been discussed. Furthermore, studies to complement the service life characteristics of the silicon-based negative electrode by limiting the proportion of silicon-based active material used during initial charging and discharging by a pre-lithiation method of a silicon-based active material layer, and imparting a reservoir role have also been conducted.

However, since the above measures may make the performance of the battery rather deteriorate, there is a limitation in application, so that there is still a limitation in commercialization for the preparation of a negative electrode battery with a high content of a silicon-based compound, and in particular, as the proportion of silicon-based active material included in the silicon-based active material layer is increased, pre-lithiation is concentrated on the surface of the negative electrode, and consequently, the silicon-based active material on the surface side becomes damaged, and as a heterogeneous pre-lithiation occurs, a problem with the improvement of service life characteristics occurs.

Therefore, there is a need for research on the improvement of the cycle performance along with the capacity characteristics of a lithium secondary battery, which can prevent the electrode surface degradation during the charging and discharging cycle, by improving uniformity during pre-lithiation, even when a silicon-based compound is used as an active material.

### [Citation List]

### [Patent Document]

(Patent Document 1) Japanese Patent Application Laid-Open No. 2009-080971 Further relevant prior art can be found in US 2019/372118 A1, JP 2010 160984 A, JP 2018 142487 A and EP 3 893 295 A1.

### [Detailed Description of the Invention]

### [Technical Problem]

The present application relates to a negative electrode for a lithium secondary battery, which is capable of preventing the degradation of the electrode surface during the charging and discharging cycle, which is an existing problem while using a silicon-based active material on a negative electrode, and particularly, is capable of improving the cycle performance along with capacity characteristics of a lithium secondary battery by enhancing the uniformity during pre-lithiation, a method for preparing a negative electrode for a lithium secondary battery, and a lithium secondary battery including the negative electrode.

### [Technical Solution]

According to the invention, a negative electrode for a lithium secondary battery is provided, according to the independent claim 1. Moreover, a method for manufacturing a negative electrode for a lithium secondary battery is provided, according to the independent claim 9. A lithium secondary battery comprising said negative electrode is provided, according to the independent claim 12. Optional embodiments are described by dependent claims.

### [Advantageous Effects]

A negative electrode for a lithium secondary battery according to an exemplary embodiment of the present invention has a silicon-based negative electrode active material layer, and includes a ceramic layer having a specific composition and thickness on the silicon-based negative electrode active material layer. Since the negative electrode according to the present application has excellent capacity characteristics and excellent rapid charging capability using a silicon-based negative electrode.

However, the above-described problem of volume expansion due to the use of a silicon-based negative electrode can be solved through a process such as pre-lithiation, and in particular, during the pre-lithiation process, the reaction between silicon and the lithium layer is so fast that the problem of ignition is present. However, the negative electrode for a lithium secondary battery according to the present application can stabilize the process speed during pre-lithiation by using a silicon-based active material, and simultaneously including a ceramic layer having a specific thickness and composition on the negative electrode active material layer, and thus has a characteristic capable of significantly enhancing stability in the pre-lithiation process.

That is, as described above, the negative electrode for a lithium secondary battery according to the present application has characteristics capable of improving performance by reducing the contact points between the silicon-based negative electrode and the lithium metal to increase the charge/discharge uniformity of the silicon-based negative electrode.

In addition, the negative electrode for a lithium secondary battery according to the present application additionally has a ceramic layer on the silicon-based negative electrode active material layer, and can be used by eliminating or minimizing the ceramic layer formed on the separator to reduce the thickness of the separator, and thus can have excellent characteristics in terms of process and price.

After all, the negative electrode for a lithium secondary battery according to the present application is characterized in that a ceramic layer having a specific thickness and composition is introduced in order to take an advantage of an electrode to which a high content of Si particles as an active material having a single layer are applied and simultaneously solve a surface degradation problem, a problem of uniformity during pre-lithiation and a problem of service life characteristics, which are disadvantages when the electrode has the advantage.

### [Brief Description of Drawings]

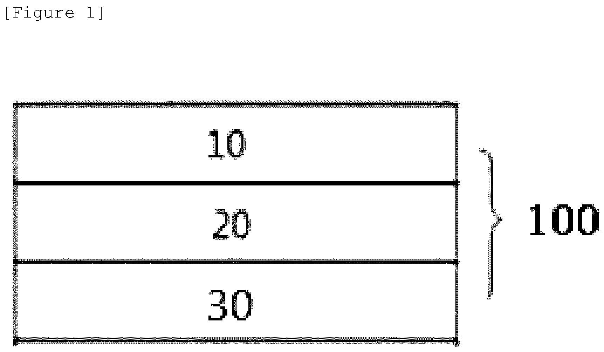

FIG. 1 is a view illustrating the stacking structure of a negative electrode for a lithium secondary battery according to an exemplary embodiment of the present application.

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present application, the BET specific surface area may mean a specific surface area measured by the measurement method.

In the present specification, "Dn" means the particle diameter distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the particle diameter distribution may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

The present invention provides a negative electrode for a lithium secondary battery, including: a negative electrode current collector layer; a silicon-based negative electrode active material layer provided on one surface or both surfaces of the negative electrode current collector layer; and a ceramic layer provided on a surface opposite to a surface of the silicon-based negative electrode active material layer brought into contact with the negative electrode current collector layer, in which the ceramic layer includes a ceramic layer composition or a dried product thereof, the thickness of the ceramic layer is 0.5 µm or more and 3 µm or less, the ceramic layer composition includes ceramic and an organic-based binder, wherein the organic-based binder is polyvinylidene fluoride (PVdF); or polyvinylidene fluoride-hexafluoropropylene (PVdF-HFP), and the ceramic and the organic-based binder are included in an amount of 80 parts by weight or more and 95 parts by weight or less and 5 parts by weight or more and 20 parts by weight or less, respectively, based on 100 parts by weight of the ceramic layer composition, and wherein the silicon-based negative electrode active material layer comprises a negative electrode active material layer composition, the negative electrode active material layer composition comprises a negative electrode conductive material comprising a planar conductive material; and a linear conductive material, and the planar conductive material is comprised in an amount of 80 parts by weight or more and 99.9 parts by weight or less based on 100 parts by weight of the negative electrode conductive material.

The negative electrode for a lithium secondary battery according to the present application is characterized in that a ceramic layer having a specific thickness and composition is introduced in order to take an advantage of an electrode to which a high content of Si particles as an active material having a single layer are applied and simultaneously solve a surface degradation problem, a problem of uniformity during pre-lithiation and a problem of service life characteristics, which are disadvantages when the electrode has the advantage.

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 and a ceramic layer 10 on one surface of a negative electrode current collector layer 30, and FIG. 1 illustrates the negative electrode active material layer formed on one surface, but the negative electrode active material layer may be included on both surfaces of the negative electrode current collector layer.

Hereinafter, the negative electrode for a lithium secondary battery of the present invention will be described in more detail.

Provided is a negative electrode for a lithium secondary battery, including: a negative electrode current collector layer; a silicon-based negative electrode active material layer provided on one surface or both surfaces of the negative electrode current collector layer; and a ceramic layer provided on a surface opposite to a surface of the silicon-based negative electrode active material layer brought into contact with the negative electrode current collector layer.

In an exemplary embodiment of the present application, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, the thickness of the negative electrode current collector layer may be 1 µm or more and 100 µm or less.

However, the thickness may be variously modified depending on the type and use of the negative electrode used, and is not limited thereto.

In an exemplary embodiment of the present application, provided is a negative electrode for a lithium secondary battery, in which the silicon-based negative electrode active material layer includes a negative electrode active material layer composition, and the negative electrode active material layer composition includes one or more selected from the group consisting of a silicon-based active material; a negative electrode conductive material; and a negative electrode binder.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material includes one or more selected from the group consisting of SiOx (x=0), SiOx (0<x<2) and metal impurities, and may include 70 parts by weight or more of the SiOx (x=0) based on 100 parts by weight of the silicon-based active material.

In another exemplary embodiment, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In still another exemplary embodiment, the SiOx (x=0) may be included in an amount of 70 parts by weight or more, preferably 80 parts by weight or more, and more preferably 90 parts by weight or more, and may be included in an amount of 100 parts by weight or less, preferably 99 parts by weight or less, and more preferably 95 parts by weight or less, based on 100 parts by weight of the silicon-based active material.

In an exemplary embodiment of the present application, for the silicon-based active material, particularly, pure silicon (Si) may be used as the silicon-based active material. The use of pure silicon (Si) as the silicon-based active material may mean that based on the total 100 parts by weight of the silicon-based active material as described above, pure Si particles (SiOx (x=0)), which are not bound to other particles or elements, are included in the above range.

In an exemplary embodiment of the present application, the silicon-based active material may be composed of SiOx (x=0).
Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the charging and discharging process.

The negative electrode active material layer according to the present application includes the silicon-based active material, and specifically includes pure silicon particles including 70 parts by weight or more of SiOx (x=0). In this case, when pure silicon particles are included in a high content, the capacity characteristics are excellent, and in order to solve the service life deterioration characteristics caused by the resulting surface heterogeneous reaction, the above problem was solved by including the ceramic layer according to the present invention.

Meanwhile, the silicon-based active material of the present invention may have an average particle diameter (D50) of 5 µm to 10 µm, specifically 5.5 µm to 8 um, and more specifically 6 µm to 7 µm. When the average particle diameter is less than 5 µm, the specific surface area of the particles increases excessively, resulting in an excessive increase in the viscosity of the negative electrode slurry. Accordingly, the particles constituting the negative electrode slurry are not smoothly dispersed. Furthermore, when the size of the silicon-based active material is excessively small, a composite composed of a conductive material and a binder in the negative electrode slurry makes a contact area between silicon particles and conductive materials reduced, so that the possibility of breaking the conductive network is increased, thereby decreasing the capacity retention rate. Meanwhile, when the average particle diameter is more than 10 µm, excessively large silicon particles are present, so that the surface of the negative electrode is not smooth, and accordingly, non-uniformity in current density occurs during charging and discharging. Further, when the silicon particles are excessively large, processability deteriorates because the phase stability of the negative electrode slurry becomes unstable. Accordingly, the capacity retention rate of the battery deteriorates.

In an exemplary embodiment of the present application, the silicon-based active material generally has a characteristic BET specific surface area. The BET specific surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET specific surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode active material layer composition in which the silicon-based active material is present in an amount of 70 parts by weight or more based on 100 parts by weight of the negative electrode active material layer composition.

In another exemplary embodiment, the silicon-based active material may be included in an amount of 70 parts by weight or more, preferably 75 parts by weight or more, and more preferably 80 parts by weight or more, and may be included in an amount of 95 parts by weight or less, preferably 90 parts by weight or less, and more preferably 85 parts by weight or less, based on 100 parts by weight of the negative electrode active material layer composition.

The negative electrode active material layer composition according to the present application solved a surface degradation problem in charging and discharging, a problem of uniformity during pre-lithiation, and a problem of service life characteristics without making the capacity performance of the entire negative electrode deteriorate together using a ceramic layer to be described below even though a silicon-based active material having a remarkably high capacity is used in the above range. Further, the negative electrode active material layer composition according to the present application has a feature in which by using a specific conductive material and a specific binder, which can suppress the volume expansion rate in the charging and discharging process, the performance of the negative electrode does not deteriorate and output characteristics at charging and discharging are excellent even though the above range is included.

In an exemplary embodiment of the present application, the silicon-based active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 1, where A is the area and P is the boundary line. [Formula 1] $4 πA / {P}^{2}$

In the related art, it was common to use only a graphite-based compound as a negative electrode active material, but recently, as the demand for a high-capacity battery has increased, attempts to mix and use a silicon-based active material have been increased in order to increase the capacity. However, in the case of the silicon-based active material, even though characteristics of the silicon-based active material itself are adjusted as described above, the volume rapidly expands in the process of charging and discharging, so that a problem in that a conductive path formed in the negative electrode active material layer is impaired may occur in some cases.

Therefore, in an exemplary embodiment of the present application, provided is a negative electrode for a lithium secondary battery in which the negative electrode active material layer composition includes one or more selected from the group consisting of a negative electrode conductive material; and a negative electrode binder.

In an exemplary embodiment of the present application, the negative electrode conductive material may include one or more selected from the group consisting of a particulate conductive material; a planar conductive material; and a linear conductive material.

In an exemplary embodiment of the present application, the particulate conductive material may be used to enhance the conductivity of the negative electrode, and means a conductive material having conductivity in a spherical or dot form without inducing a chemical change. Specifically, the particulate conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the particulate conductive material may have a BET specific surface area of 40 m²/g or more and 70 m²/g or less, preferably 45 m²/g or more and 65 m²/g or less, and more preferably 50 m²/g or more and 60 m²/g or less.

In an exemplary embodiment of the present application, the functional group content (volatile matter) of the particulate conductive material may satisfy 0.01% or more and 1% or less, preferably 0.01% or more and 0.3% or less, and more preferably 0.01% or more and 0.1% or less.

In particular, when the functional group content of the particulate conductive material satisfies the above range, a functional group present on the surface of the particulate conductive material is present, so that when water is used as a solvent, the particulate conductive material may be smoothly dispersed in the solvent.

In an exemplary embodiment of the present application, it is characterized in that the particulate conductive material having a functional group content in the above range is included along with the silicon-based active material, and the functional group content may be adjusted according to the degree to which the particulate conductive material is heat-treated.

That is, in the manufacture of the particulate conductive material, a high functional group content means that a large amount of foreign materials are present, and a low functional group content may mean that a heat treatment processing has been conducted more frequently.

In an exemplary embodiment of the present application, the particulate conductive material may have a particle diameter of 10 nm to 100 nm, preferably 20 nm to 90 nm, and more preferably 20 nm to 60 nm.

In an exemplary embodiment of the present application, the negative electrode conductive material may include a planar conductive material.

The planar conductive material may increase the surface contact between silicon particles in the negative electrode to improve conductivity and simultaneously suppress the disconnection of the conductive path due to the volume expansion, and may be expressed as a plate-like conductive material or bulk-type conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 µm to 7 µm, specifically 3 µm to 6 µm, and more specifically 4 µm to 5 µm. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, the planar conductive material may have a D10 of 0.5 µm or more and 1.5 µm or less, a D50 of 2.5 µm or more and 3.5 µm or less, and a D90 of 7.0 µm or more and 15.0 µm or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 5 m²/g or more.

In another exemplary embodiment, the planar conductive material may have a BET specific surface area of 5m²/g or more and 500 m²/g or less, preferably 5m²/g or more and 300m²/g or less, and more preferably 5m²/g or more and 250m²/g or less.

In still another exemplary embodiment, the planar conductive material is a high specific surface area planar conductive material, and the BET specific surface area may satisfy a range of 50 m²/g or more and 500 m²/g or less, preferably 80 m²/g or more and 300 m²/g or less, and more preferably 100 m²/g or more and 300 m²/g or less.

In yet another exemplary embodiment, the planar conductive material is a low specific surface area planar conductive material, and the BET specific surface area may satisfy a range of 5 m²/g or more and 40 m²/g or less, preferably 5 m²/g or more and 30 m²/g or less, and more preferably 5 m²/g or more and 25 m²/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is roll-pressed. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, the linear conductive material may include SWCNT; or MWCNT.

In an exemplary embodiment of the present application, provided is a negative electrode active material layer composition, in which the negative electrode conductive material is included in an amount of 10 parts by weight or more and 40 parts by weight or less, based on 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 25 parts by weight or less, based on 100 parts by weight of the negative electrode active material layer composition.

According to the invention of the present application, provided is a negative electrode for a lithium secondary battery, in which the negative electrode conductive material includes a planar conductive material; and a linear conductive material, and the planar conductive material is included in an amount of 80 parts by weight or more and 99.9 parts by weight or less based on 100 parts by weight of the negative electrode conductive material.

In another exemplary embodiment, the planar conductive material may be included in an amount of 80 parts by weight or more and 99.9 parts by weight or less, preferably 95 parts by weight or more and 99.9 parts by weight or less, based on 100 parts by weight of the negative electrode conductive material.

In another exemplary embodiment, the linear conductive material may be included in an amount of 0.1 parts by weight or more and 20 parts by weight or less, preferably 0.1 parts by weight or more and 10 parts by weight or less, and more preferably 0.1 parts by weight or more and 5 parts by weight or less, based on 100 parts by weight of the negative electrode conductive material.

In particular, in an exemplary embodiment of the present application, as the negative electrode conductive material includes a planar conductive material and a linear conductive material and each satisfies the composition and ratio, the negative electrode conductive material has a feature in which output characteristics at high C-rate are excellent because the service life characteristics of the existing lithium secondary battery are not greatly affected and points where the battery can be charged and discharged are increased.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the planar conductive material used as the above-described negative electrode conductive material has a structure and a role different from those of a carbon-based active material generally used as an existing negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the plate-like conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 m²/g or more and 4.5 m²/g or less. In addition, plate-like graphite, which is a planar conductive material, is in a planar form, and may have a BET specific surface area of 5 m²/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, an aqueous binder can be used, and more specifically, a PAM-based binder can be used.

In an exemplary embodiment of the present application, the negative electrode binder may be included in an amount of 30 parts by weight or less, preferably 25 parts by weight or less, and more preferably 20 parts by weight or less, and may be included in an amount of 5 parts by weight or more and 10 parts by weight or more, based on 100 parts by weight of the negative electrode active material layer composition.

In particular, for the negative electrode binder according to the present application, an aqueous binder is used as a highly rigid silicon-based active material is used. The aqueous binder is a polymer which exhibits very high rigidity after drying. The negative electrode active material layer composition according to the present application includes an aqueous binder, and when an aqueous ceramic layer is coated on the aqueous silicon-based negative electrode active material layer and dried, the surface is mixed due to water and inter-mixing occurs no matter how quickly the aqueous ceramic layer is dried. In order to solve the above problems, the ceramic layer according to the present application has a feature in which the negative electrode active material layer can be very densely coated with the ceramic layer because an organic-based binder and an organic-based solvent may be used to easily form a dispersion of the ceramic and the organic-based binder without affecting the aqueous negative electrode.

In an exemplary embodiment of the present application, the negative electrode for a lithium secondary battery according to the present application includes: a ceramic layer provided on a surface opposite to a surface of the silicon-based negative electrode active material layer brought into contact with the negative electrode current collector layer.

As described above, the negative electrode for a lithium secondary battery according to the present application includes a ceramic layer, and by including the above-described negative electrode active material, a surface degradation problem during charging and discharging, a problem of uniformity during pre-lithiation, and a problem of service life characteristics were solved while maintaining the high capacity and high density characteristics.

In an exemplary embodiment of the present application, the ceramic layer may include a ceramic layer composition or a dried product thereof.

In this case, including the ceramic layer composition may mean that the ceramic layer includes the ceramic layer composition as it is. In addition, including the dried product of the ceramic layer composition may mean the case where the organic-based solvent, which may be included in the ceramic layer composition, is completely removed after drying and thus is not included in the ceramic layer.

In an exemplary embodiment of the present application, the thickness of the ceramic layer may be 0.5 µm or more and 3 µm or less.

In another exemplary embodiment, the thickness of the ceramic layer may satisfy 0.5 µm or more and 3 µm or less, preferably 0.7 µm or more and 2.5 µm or less.

As described above, as the thickness of the ceramic layer satisfies the above range, it is possible to obtain an effect of improving stability by controlling the rate of pre-lithiation during pre-lithiation. When the thickness of the ceramic layer exceeds the above range, problems such as deterioration in the performance of the negative electrode may occur, and rather, it is possible to cause a result in which the efficiency is lowered during pre-lithiation. In addition, when the thickness of the ceramic layer is less than the above range, the rate of pre-lithiation is not easily controlled, so that the surface reaction on the negative electrode active material layer may cause deterioration of the electrode, resulting in a reduced service life.

In an exemplary embodiment of the present application, the ceramic layer composition may include ceramic and an organic-based binder.

In an exemplary embodiment of the present application, the ceramic can be used without limitation as long as it can serve as a ceramic layer, but specifically, provided is a negative electrode for a lithium secondary battery, in which the ceramic includes one or more selected from the group pconsisting of Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr,Ti)O₃ (PZT), (Pb,La)(Zr,Ti)O₃(PLZT), Pb(Mg_{1/3}Nb_{2/3})O₃-PbTiO₃ (PMN-PT) and hafnia (HfO₂).

More specifically, the ceramic may be Al₂O₃, or CeO₂.

In an exemplary embodiment of the present application, provided is a negative electrode for a lithium secondary battery, in which the ceramic composition further includes an organic-based solvent, and the organic-based solvent includes one or more selected from the group consisting of N-methyl pyrrolidone (NMP); dimethylformamide (DMF); acetone; and dimethylacetamide.

More preferably, the organic-based solvent may be acetone.

According to the invention of the present application, provided is a negative electrode for a lithium secondary battery, in which the organic-based binder is polyvinylidene fluoride (PVdF); or polyvinylidene fluoride-hexafluoropropylene (PVdF-HFP).

In particular, as described above, in the silicon-based negative electrode active material layer, an aqueous binder is used due to the characteristics of the silicon-based active material. Accordingly, the coatability of the ceramic layer may be secured using an organic-based binder and an organic-based solvent for dispersing the organic-based binder in the ceramic layer.

In addition, although the aqueous binder is a polymer which exhibits a very high rigidity after drying, the aqueous binder generally corresponds to a binder whose adhesion deteriorates after drying. However, the organic-based binder used for the ceramic layer corresponds to a very soft polymer, and expresses a slight amount of stickiness, that is, adhesion, compared to the aqueous binder.

Accordingly, the lithium metal layer is transferred onto the ceramic layer during pre-lithiation, and in this case, when the ceramic layer includes an organic-based binder, the lithium metal layer is easily transferred onto the ceramic layer through the expression of a small amount of adhesion as described above, so that the silicon-based negative electrode active material layer has a feature in which processability is also improved.

In an exemplary embodiment of the present application, provided is a negative electrode for a lithium secondary battery, in which adhesion is 10 gf/15 mm or more and 100 gf/15 mm or less after adhering lithium metal to a surface opposite to a surface of the ceramic layer brought into contact with the negative electrode active material layer, and then allowing the resulting adherend to stand at 23°C for 10 seconds to 2 minutes.

The adhesion was measured at 90° and a speed of 5 mm/s using 3M 9070 tape as a peel strength measuring device. Specifically, one surface of a lithium metal layer of a negative electrode in which a lithium metal layer is stacked on a ceramic layer is adhered to one surface of a slide glass (3M 9070 tape) to which an adhesive film is attached. Thereafter, the adhesive film is attached by reciprocating a 2 kg rubber roller 5 to 10 times, and the adhesion (peeling force) was measured at a speed of 5 mm/s in the direction of an angle at 90°. In this case, adhesion may be measured under conditions of 23°C and normal pressure.

In an exemplary embodiment of the present application, normal pressure may mean a pressure in which a specific pressure is not applied or lowered, and may be used in the same sense as atmospheric pressure. In general, the normal pressure may be expressed as 1 atm.

In an exemplary embodiment of the present application, adhesion may be 10 gf/15 mm or more and 100 gf/15 mm or less, preferably 15 gf/15 mm or more and 95 gf/15 mm or less, and more preferably 20 gf/15 mm or more and 50 gf/15 mm or less after adhering lithium metal to a surface opposite to a surface of the ceramic layer brought into contact with the negative electrode active material layer, and then allowing the lithium metal to stand at 23°C for 10 seconds to 2 minutes.

As described above, the adhesion between the ceramic layer and the lithium metal satisfies the above range, and the adhesion between the lithium metal and the ceramic layer is good when the lithium metal is transferred using the transfer process during the pre-lithiation process, so that the negative electrode for a lithium secondary battery has a feature in which the pre-lithiation process can be smoothly performed because transferability may be secured and problems such as reverse transfer are not caused.

In an exemplary embodiment of the present application, provided is a negative electrode for a lithium secondary battery, in which the ceramic and the organic-based binder are included in an amount of 80 parts by weight or more and 95 parts by weight or less and 5 parts by weight or more and 20 parts by weight or less, respectively, based on 100 parts by weight of the ceramic layer composition.

In this case, the organic-based solvent which may be included in the ceramic layer composition does not correspond to an effective material, and the reference of 100 parts by weight of the ceramic layer composition may mean the part by weight including only the ceramic and the organic-based binder.

In an exemplary embodiment of the present application, the ceramic may satisfy 80 parts by weight or more and 95 parts by weight or less, preferably 85 parts by weight or more and 95 parts by weight or less, and more preferably 90 parts by weight or more and 95 parts by weight or less, based on 100 parts by weight of the ceramic layer composition.

In an exemplary embodiment of the present application, the organic-based binder may satisfy 5 parts by weight or more and 20 parts by weight or less, preferably 5 parts by weight or more and 15 parts by weight or less, and more preferably 5 parts by weight or more and 10 parts by weight or less, based on 100 parts by weight of the ceramic layer composition.

As described above, as the ceramic layer composition includes the organic-based binder and the ceramic as the parts by content, the dispersibility of the binder and the ceramic is improved, so that the negative electrode for a lithium secondary battery has a feature capable of improving coating density during the coating of the ceramic layer because the rate of pre-lithiation may be smoothly controlled as the ceramic layer composition is uniformly formed on the ceramic layer, and a suitable viscosity range is satisfied.

In an exemplary embodiment of the present application, the thickness of the negative electrode active material layer may be 10 µm or more and 200 µm or less.

In an exemplary embodiment of the present application, the negative electrode for a lithium secondary battery may be a pre-lithiated negative electrode.

In an exemplary embodiment of the present application, provided is a method for manufacturing a negative electrode for a lithium secondary battery, the method including: preparing a negative electrode current collector layer; forming a negative electrode active material layer by applying a negative electrode active material layer composition to one surface or both surfaces of the negative electrode current collector layer; and forming a ceramic layer by applying a ceramic layer composition to a surface opposite to a surface of the negative electrode active material layer brought into contact with the negative electrode current collector layer, in which the thickness of the ceramic layer is 0.5 µm or more and 3 µm or less, the ceramic layer composition includes ceramic, an organic-based binder and an organic-based solvent, and the ceramic and the organic-based binder are included in an amount of 80 parts by weight or more and 95 parts by weight or less and 5 parts by weight or more and 20 parts by weight or less, respectively, based on 100 parts by weight of the ceramic layer composition.

In the method for preparing the negative electrode, the above-described contents may be applied to the composition and content included in each step.

In an exemplary embodiment of the present application, provided is forming a negative electrode active material layer by applying a negative electrode active material layer composition to one surface or both surfaces of the negative electrode current collector layer.

That is, the above step is forming a negative electrode active material layer on the negative electrode current collector layer, and may mean forming an active material layer on a surface brought into contact with the current collector layer.

In an exemplary embodiment of the present application, the applying of the negative electrode active material layer composition includes applying a negative electrode slurry including the negative electrode active material layer composition; and a negative electrode slurry solvent and drying the applied negative electrode slurry.

In this case, the solid content of the negative electrode slurry may satisfy a range of 10% to 40%.

In an exemplary embodiment of the present application, the forming of the negative electrode active material layer may include: mixing the negative electrode slurry; and coating one surface or both surfaces of the negative electrode current collector layer with the mixed negative electrode slurry, and for the coating, a coating method generally used in the art may be used.

Thereafter, in an exemplary embodiment of the present application, provided is forming a ceramic layer by applying a ceramic layer composition on a surface opposite to a surface of the negative electrode active material layer brought into contact with the negative electrode current collector layer.

In an exemplary embodiment of the present application, provided is a method for manufacturing a negative electrode for a lithium secondary battery, the method including applying the ceramic layer composition, and then drying the organic-based solvent in the ceramic layer composition through drying and roll-pressing.

In an exemplary embodiment of the present application, the negative electrode slurry solvent can be used without limitation as long as the negative electrode slurry solvent can dissolve and disperse a negative electrode active material layer composition, and specifically, water or NMP may be used.

In an exemplary embodiment of the present application, provided is a method for manufacturing a negative electrode for a lithium secondary battery, the method including: subjecting a negative electrode in which a negative electrode active material layer and a ceramic layer are formed on the negative electrode current collector layer to pre-lithiation, in which the subjecting of the negative electrode to pre-lithiation includes: a lithium electroplating process; a lithium metal transfer process; a lithium metal deposition process; or a stabilized lithium metal powder (SLMP) coating process.

The negative electrode for a lithium secondary battery as described above includes SiOx (x=0) for enhancing the capacity characteristics as a negative electrode active material layer, is provided with the above-described specific composition and thickness as a ceramic layer, and thus may have an advantage of quick charging as it is. That is, compared to the case where only the negative electrode active material layer is simply applied, the ceramic layer has the composition as described above, and thus a uniform pre-lithiation process can be performed on the upper portion of the negative electrode, and accordingly, the negative electrode has a feature in which the service life may be further improved.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the negative electrode conductive material; and the negative electrode binder included in the negative electrode active material layers, and accordingly, the electric conductivity and resistance in the electrode are characterized by having appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0. 33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Further, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

In particular, the negative electrode for a lithium secondary battery according to the present application additionally has a ceramic layer on the silicon-based negative electrode active material layer according to the present application, and can be used by eliminating or minimizing the ceramic layer formed on the separator to reduce the thickness of the separator, and thus can have excellent characteristics in terms of process and price.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates such as ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

### [Mode for Invention]

Hereinafter, preferred embodiments will be suggested to facilitate understanding of the present invention, but the embodiments are only provided to illustrate the present invention, and it is apparent to those skilled in the art that the scope of the invention lies within the accompanying claims.

### <Examples>

### <Manufacture of negative electrode>

### Example 1: Manufacture of negative electrode

### Preparation of negative electrode active material layer

A negative electrode active material layer composition including Si (average particle diameter (D50): 5 µm) as a silicon-based active material, a first conductive material, a second conductive material, and polyacrylamide as a binder at a weight ratio of 80:9.6:0.4:10 was prepared. A negative electrode slurry was prepared by adding the negative electrode active material layer composition to distilled water as a solvent for forming a negative electrode slurry (solid concentration of 28 wt%).

The first conductive material was plate-like graphite (specific surface area: 17 m²/g, average particle diameter (D50): 3.5 µm), and the second conductive material was carbon nanotubes.

After the first conductive material, the second conductive material, the binder and water were dispersed at 2500 rpm for 30 minutes using a homo mixer as a mixing method, an active material was added thereto, and then the resulting mixture was dispersed at 2500 rpm for 30 minutes to prepare a slurry.

Both surfaces of a copper current collector (thickness: 15µm) as a negative electrode current collector were coated with the negative electrode slurry in a loading amount of 3.00 mg/cm², and the copper current collector was roll-pressed and dried in a vacuum oven at 130°C for 10 hours to form a negative electrode active material layer (thickness: 23 µm).

### Preparation of ceramic layer

A ceramic layer composition was prepared with Ce (Al₂O₃, d50:300 nm) as a ceramic and PVdF-HFP as an organic-based binder at a weight ratio of 92:8. Then, the above ceramic layer composition was added to acetone, which is an organic-based solvent, to prepare a ceramic layer composition. (solid content concentration 18 wt%)

Thereafter, the negative electrode active material layer was coated with the ceramic layer composition, roll-pressed, and dried in a vacuum oven at 60°C for 10 hours to form a ceramic layer (thickness: 1 µm).

A negative electrode was manufactured in the same manner as in Example 1, except that the conditions for preparing the negative electrode active material layer and the ceramic layer were changed as follows.

**[Table 1]**

| | Ceramic layer | | | | Negative electrode active material layer |
|---|---|---|---|---|---|
| | Composition (parts by weight) | Solvent | Solid content (wt%) | Thickness (µm) | Composition |
| Example 2 | Ce:PVdF-HFP = 92:8 | Acetone | 15 | 0.7 | The same as Example 1 |
| Example 3 | Ce:PVdF-HFP = 92:8 | Acetone | 15 | 2.5 | The same as Example 1 |
| Example 4 | Ce:PVdF-HFP = 90:10 | Acetone | 15 | 1 | The same as Example 1 |
| Example 5 | Ce:PVdF-HFP = 95:5 | Acetone | 15 | 1 | The same as Example 1 |
| Comparative Example 1 | Ce:PVdF-HFP = 92:8 | Acetone | 15 | 0.3 | The same as Example 1 |
| Comparative Example 2 | Ce:PVdF-HFP = 92:8 | Acetone | 15 | 5 | The same as Example 1 |
| Comparative Example 3 | Ce:PVdF-HFP = 75:25 | Acetone | 15 | 0.7 | The same as Example 1 |
| Comparative Example 4 | Ce:PVdF-HFP = 97:3 | Acetone | 15 | 0.7 | The same as Example 1 |
| Comparative Example 5 | Ce:PAM = 80:20 | H₂0 | 15 | 0.7 | The same as Example 1 |
| Compara tive Example 6 | Ce:PVdF-HFP = 92:8 | Aceto ne | 15 | 0.7 | A negative electrode active material layer composition was prepared with artificial graphite as a carbon-based active material: carbon black as a conductive material: polyacrylamide as a binder at a weight ratio of 80:10:10. (thickness of negative electrode:150 µm) |

### Pre-lithiation process

A transfer laminate composed of PET/release layer/lithium metal was laminated on the negative electrodes of Examples 1 to 5 and Comparative Examples 1 to 6 and the PET layer was removed to transfer lithium metal onto the ceramic layer.

Thereafter, a negative electrode for a lithium secondary battery was pre-lithiated.

### <Manufacture of secondary battery>

A positive electrode slurry was prepared by adding LiNi_{0.6}Co_{0.2}Mn_{0.2}O₂ (average particle diameter (D50): 15 µm) as a positive electrode active material, carbon black (product name: Super C65, manufacturer: Timcal) as a conductive material, and polyvinylidene fluoride (PVdF) as a binder at a weight ratio of 97:1.5:1.5 to N-methyl-2-pyrrolidone (NMP) as a solvent for forming a positive electrode slurry (solid concentration of 78 wt%).

Both surfaces of an aluminum current collector (thickness: 12 µm) as a positive electrode current collector were coated with the positive electrode slurry in a loading amount of 537 mg/25 cm², and the aluminum current collector was roll-pressed and dried in a vacuum oven at 130°C for 10 hours to form a positive electrode active material layer (thickness: 65 µm), thereby manufacturing a positive electrode (thickness of the positive electrode: 77 µm, porosity of 26%).

A secondary battery of Example 1 was manufactured by interposing a polyethylene separator between the positive electrode and the negative electrode of Example 1 and injecting an electrolyte thereinto.

The electrolyte was obtained by adding 3 wt% of vinylene carbonate based on the total weight of the electrolyte to an organic solvent in which fluoroethylene carbonate (FEC) and diethyl carbonate (DEC) were mixed at a volume ratio of 30:70 and adding LiPF₆ as a lithium salt at a concentration of 1 M thereto.

Secondary batteries were each manufactured in the same manner as described above, except that the negative electrodes of Examples 2 to 5 and Comparative Examples 1 to 6 were used.

### Experimental example 1. Performance evaluation at each discharge C-rate

A discharge rate experiment (charge rate fixed, discharge rate changed to 0.2/0.5/1.0/1.5/2.0/3.0/4.0) was performed to confirm the performance of the secondary batteries of Examples and Comparative Examples manufactured above at each discharge rate

The discharge rate experiment was performed with 0.33/0.2 > 0.33/0.33 > 0.33/0.5 > 0.33/0.33 >0.33/1.0 > 0.33/0.33 > 0.33/1.5 > 0.33/0.33 > 0.33/2.0 > 0.33/0.33 > 0.33/3.0 > 0.33/0.33 > 0.33/4.0, and pre-lithiation was not separately performed. Then, in order to confirm the ratio, the capacity for each rate is shown with the 0.2 C discharge capacity standard as 100%. The results are shown in the following Table 2.

**[Table 2]**

| | Discharge C-rate | | | | | | |
|---|---|---|---|---|---|---|---|
| | 0.2 | 0.5 | 1.0 | 1.5 | 2.0 | 3.0 | 4.0 |
| Example 1 | 100 | 98.1 | 94.0 | 89.8 | 84.9 | 69.5 | 51.5 |
| Example 2 | 100 | 97.7 | 93.7 | 89.5 | 84.3 | 68.9 | 51.0 |
| Example 3 | 100 | 97.0 | 92.5 | 88.1 | 82.2 | 66.3 | 49.5 |
| Example 4 | 100 | 97.6 | 93.4 | 88.8 | 83.7 | 68.2 | 51.3 |
| Example 5 | 100 | 97.7 | 93.6 | 89.2 | 84.0 | 68.8 | 51.1 |
| Comparative Example 1 | 100 | 98.1 | 94.0 | 89.9 | 85.0 | 69.3 | 51.5 |
| Comparative Example 2 | 100 | 96.0 | 91.8 | 87.2 | 82.3 | 66.6 | 45.1 |
| Comparative Example 3 | 100 | 97.4 | 93.9 | 89.2 | 84.1 | 68.2 | 51.1 |
| Comparative Example 4 | 100 | 97.1 | 93.2 | 89.9 | 84.4 | 68.5 | 51.3 |
| Comparative Example 5 | 100 | 93.2 | 89.5 | 85.4 | 80.1 | 63.1 | 41.5 |
| Comparative Example 6 | 100 | 89.5 | 80.4 | 75.2 | 70.8 | 52.3 | 31.9 |

Since the ceramic layer according to the present invention does not contain a conductive material compared to the negative electrode active material layer and is composed only of an insulating material and a binder, it could be confirmed that the thicker the ceramic layer, the worse the rate characteristics. Further, the higher the proportion of the binder (PVdF-HFP) in the ceramic layer, the more effective for forming the pore structure of the ceramic layer, so that the resistance is lowered. Conversely, when the proportion of the binder is increased, the ceramic material and the material are adhered to form a layer, so that pores are blocked to reduce the ionic conductivity of the electrolyte solution, resulting in performance degradation.

In addition, as can be confirmed from Comparative Example 5 in Table 2, when a PAM-based binder, which is an aqueous binder, is used instead of PVdF, and water (H₂O), which is an aqueous solvent, is used, the performance significantly deteriorates. This is because during the drying of the ceramic layer, the ceramic layer tends to become very hard while the strength of the binder becomes very high. In addition, the reason is that the wettability of the electrolyte solution becomes very low while the ceramic layer and the negative electrode active material layer are strongly adsorbed because the binder has a chemical structure similar to the binder used in silicon (Si) electrodes.

Comparative Example 6 in Table 2 is the result of manufacturing a graphite electrode with the same capacity, and since the capacity of silicon is 10-fold higher than that of graphite, in the case of Comparative Example 6, the electrode is very thickly coated, so that it could be confirmed that the discharge rate performance significantly deteriorated compared to those of Examples 1 to 5.

### Experimental Example 2: Electrode ignition experiment

After Li metal having the same size and a thickness of 6.2 µm was adsorbed onto the negative electrodes of the Examples and Comparative Examples manufactured above, the negative electrodes were allowed to stand for about 12 hours, and pre-lithiation was completely performed. Using a plasma lighter, sparks were artificially generated on the surface of the pre-lithiated negative electrode prepared for the experiment, and accordingly, the time taken for ignition was measured, and the results are shown in the following Table 3.

**[Table 3]**

| | Time taken for ignition (seconds, s) |
|---|---|
| Example 1 | 21 |
| Example 2 | 10 |
| Example 3 | 30 sec or more |
| Example 4 | 20 |
| Example 5 | 18 |
| Comparative Example 1 | 6 |
| Comparative Example 2 | 30 sec or more |
| Comparative Example 3 | 3 |
| Comparative Example 4 | 5 |
| Comparative Example 5 | 10 |
| Comparative Example 6 | 11 |

As can be seen in Table 3, all the negative electrodes having a ceramic layer according to the present application are in a state where the ceramic layer is coated, so there are some differences in time, but it could be confirmed that as the time it takes to ignite becomes longer, the possibility of ignition becomes low, and thus the safety is high.

From the results of Experimental Example 2, it was confirmed that the insulation characteristics are affected according to the proportion of ceramics with the main characteristics of insulation and the coated thickness, and accordingly, it could be confirmed that Comparative Example 1, in which the thickness of the insulating layer was less than the thickness range of the present application, was ignited at the earliest time (6 seconds), and thus stability deteriorated.

In the case of Comparative Example 2, it could be confirmed that it took 30 seconds or more to ignite when the thickness of the ceramic layer exceeded the range of the present application, but as can be confirmed from the above-described Table 2, it could be confirmed that the discharge rate performance significantly deteriorated, and thus rather, the efficiency was lowered during pre-lithiation.

The cases of Comparative Examples 3 and 4 correspond to the case where the thickness of the ceramic layer satisfies the range of the present application, but the content of the binder is less than or exceeds the range of the present application. In this case, since the dispersibility of the ceramic itself is not good, the rate of pre-lithiation cannot be smoothly controlled, causing problems such as fire in the pre-lithiation process itself, so that the thickness of the ceramic layer satisfied the thickness range of the present application, but a poor result was shown in the safety evaluation.

Comparative Example 5 is a case where a negative electrode was manufactured using an aqueous binder and an aqueous solvent in the ceramic layer, and likewise, the thickness of the ceramic layer satisfied the thickness range in the evaluation stability and has the same results as in the Examples, but as can be confirmed in the above-described Experimental Example 1, it could be confirmed that the performance significantly deteriorated in the performance evaluation.

Finally, Comparative Example 6 is a case where a graphite-based active material was used, and as mentioned in the above-described Experimental Example 1, the electrode had to be very thick in order to develop the same capacity, and accordingly, it could be confirmed that the discharge rate performance significantly deteriorated compared to Examples 1 to 5.

For reference, it could be confirmed that when a negative electrode which was not provided with the ceramic layer according to the present application was pre-lithiated under the same conditions, and then the experiment was performed, the electrode was ignited within 2 to 3 seconds, and thus safety was not good.

After all, through the Examples and the Comparative Examples, it could be confirmed that the negative electrode for a lithium secondary battery according to the present application can stabilize the process speed during pre-lithiation by using a silicon-based active material, and simultaneously including a ceramic layer having a specific thickness and composition on the negative electrode active material layer, and thus has a characteristic capable of significantly enhancing stability in the pre-lithiation process.

That is, as described above, it could be confirmed that the negative electrode for a lithium secondary battery according to the present application has characteristics capable of improving performance by reducing the contact points between the silicon-based negative electrode and the lithium metal to increase the charge/discharge uniformity of the silicon-based negative electrode.

The negative electrode for a lithium secondary battery according to the present application additionally has a ceramic layer on the silicon-based negative electrode active material layer, and can be used by eliminating or minimizing the ceramic layer formed on the separator to reduce the thickness of the separator, and thus can have excellent characteristics in terms of process and price.

### [Explanation of Reference Numerals and Symbols]

- 10:: Ceramic layer
- 20:: Negative electrode active material layer
- 30:: Negative electrode current collector layer

## Claims

1. A negative electrode (100) for a lithium secondary battery, comprising: a negative electrode current collector layer (30); a silicon-based negative electrode active material layer (20) provided on one surface or both surfaces of the negative electrode current collector layer (30); and a ceramic layer (10) provided on a surface opposite to a surface of the silicon-based negative electrode active material layer (20) brought into contact with the negative electrode current collector layer (30),
wherein the ceramic layer (10) comprises a ceramic layer composition or a dried product thereof,
**characterized in that**:
a thickness of the ceramic layer (10) is 0.5 µm or more and 3 µm or less,
the ceramic layer composition comprises ceramic and an organic-based binder, wherein the organic-based binder is polyvinylidene fluoride (PVdF); or polyvinylidene fluoride-hexafluoropropylene (PVdF-HFP),
the ceramic and the organic-based binder are comprised in an amount of 80 parts by weight or more and 95 parts by weight or less and 5 parts by weight or more and 20 parts by weight or less, respectively, based on 100 parts by weight of the ceramic layer composition, and
wherein the silicon-based negative electrode active material layer (20) comprises a negative electrode active material layer composition,
the negative electrode active material layer composition comprises a negative electrode conductive material comprising a planar conductive material; and a linear conductive material, and
the planar conductive material is comprised in an amount of 80 parts by weight or more and 99.9 parts by weight or less based on 100 parts by weight of the negative electrode conductive material.

2. The negative electrode (100) of claim 1, wherein the ceramic comprises one or more selected from the group consisting of Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr,Ti)O₃ (PZT), (Pb,La)(Zr,Ti) O₃ (PLZT), Pb(Mg_{1/3}Nb_{2/3})O₃-PbTiO₃ (PMN-PT) and hafnia (HfO₂).

3. The negative electrode (100) of claim 1, wherein the ceramic composition further comprises an organic-based solvent, and
the organic-based solvent comprises one or more selected from the group consisting of N-methyl pyrrolidone (NMP); dimethylformamide (DMF); acetone; and dimethylacetamide.

4. The negative electrode (100) of claim 1, wherein adhesion is 6.538 N/m ( 10 gf/15 mm ) or more and 65.38 N/m ( 100 gf/15 mm ) or less,
measured as described in the specification, after adhering lithium metal to a surface opposite to a surface of the ceramic layer (10) brought into contact with the negative electrode active material layer (20), and then allowing the resulting adherend to stand at 23°C for 10 seconds to 2 minutes.

5. The negative electrode (100) of claim 1, wherein the negative electrode active material layer composition further comprises one or more selected from the group consisting of a silicon-based active material; and a negative electrode binder.

6. The negative electrode (100) of claim 5, wherein the silicon-based active material comprises one or more selected from the group consisting of SiOx (x=0) and SiOx (0<x<2), and comprises 70 parts by weight or more of the SiOx (x=0) based on 100 parts by weight of the silicon-based active material.

7. The negative electrode (100) of claim 5, wherein the planar conductive material is comprised in an amount of 95 parts by weight or more and 99.9 parts by weight or less based on 100 parts by weight of the negative electrode conductive material.

8. The negative electrode (100) of claim 5, wherein the silicon-based active material is comprised in an amount of 70 parts by weight or more based on 100 parts by weight of the negative electrode active material layer composition.

9. A method for manufacturing the negative electrode (100) for a lithium secondary battery, according to claims 1-8, the method comprising:
preparing a negative electrode current collector layer (30) ;
forming a negative electrode active material layer (20) by applying a negative electrode active material layer composition to one surface or both surfaces of the negative electrode current collector layer (30); and
forming a ceramic layer (10) by applying a ceramic layer composition to a surface opposite to a surface of the negative electrode active material layer (20) brought into contact with the negative electrode current collector layer (30) ,
**characterized in that**:
a thickness of the ceramic layer (10) is 0.5 µm or more and 3 µm or less,
the ceramic layer composition comprises ceramic, an organic-based binder and an organic-based solvent, wherein the organic-based binder is polyvinylidene fluoride (PVdF); or polyvinylidene fluoride-hexafluoropropylene (PVdF-HFP), and
the ceramic and the organic-based binder are comprised in an amount of 80 parts by weight or more and 95 parts by weight or less and 5 parts by weight or more and 20 parts by weight or less, respectively, based on 100 parts by weight of the ceramic layer composition, and
wherein the silicon-based negative electrode active material layer (20) comprises a negative electrode active material layer composition,
the negative electrode active material layer composition comprises a negative electrode conductive material comprising a planar conductive material; and a linear conductive material, and
the planar conductive material is comprised in an amount of 80 parts by weight or more and 99.9 parts by weight or less based on 100 parts by weight of the negative electrode conductive material.

10. The method of claim 9, comprising applying the ceramic layer composition, and then drying the organic-based solvent in the ceramic layer composition through drying and roll-pressing.

11. The method of claim 9, comprising subjecting a negative electrode (100) in which a negative electrode active material layer (20) and a ceramic layer (10) are formed on the negative electrode current collector to pre-lithiation,
wherein the subjecting of the negative electrode (100) to pre-lithiation comprises: a lithium electroplating process; a lithium metal transfer process; a lithium metal deposition process; or a stabilized lithium metal powder (SLMP) coating process.

12. A lithium secondary battery comprising: a positive electrode;
the negative electrode (100) for a lithium secondary battery of any one of claims 1 to 8;
a separator provided between the positive electrode and the negative electrode (100); and
an electrolyte.

## Patentansprüche

1. Negativelektrode (100) für eine Lithium-Sekundärbatterie, umfassend: eine Stromabnehmerschicht (30) für eine Negativelektrode; eine auf einer Oberfläche oder auf beiden Oberflächen der Stromabnehmerschicht (30) für eine Negativelektrode angeordnete Aktivmaterialschicht (20) auf Siliziumbasis für eine Negativelektrode; und eine Keramikschicht (10), die auf einer Oberfläche angeordnet ist, die derjenigen Oberfläche der Aktivmaterialschicht (20) auf Siliziumbasis für die Negativelektrode gegenüberliegt, die mit der Stromabnehmerschicht (30) für eine Negativelektrode in Kontakt steht,
worin die Keramikschicht (10) eine Keramikschichtzusammensetzung oder ein getrocknetes Produkt davon umfasst,
**dadurch gekennzeichnet, dass**:
die Dicke der Keramikschicht (10) 0,5 µm oder mehr und 3 µm oder weniger beträgt,
die Keramikschichtzusammensetzung Keramik und ein Bindemittel auf organischer Basis umfasst, worin das Bindemittel auf organischer Basis Polyvinylidenfluorid (PVdF) oder Polyvinylidenfluorid-Hexafluorpropylen (PVdF-HFP) ist,
die Keramik und das Bindemittel auf organischer Basis in einer Menge von 80 Gewichtsteilen oder mehr und 95 Gewichtsteilen oder weniger bzw. 5 Gewichtsteilen oder mehr und 20 Gewichtsteilen oder weniger, bezogen auf 100 Gewichtsteile der keramischen Schichtzusammensetzung, umfasst sind, und
worin die auf Silizium basierende Aktivmaterialschicht (20) für eine Negativelektrode eine Zusammensetzung der Aktivmaterialschicht für eine Negativelektrode umfasst, die Zusammensetzung der Aktivmaterialschicht für die Negativelektrode ein leitfähiges Material für eine Negativelektrode umfasst, das ein planares leitfähiges Material und ein lineares leitfähiges Material umfasst; und
das planare leitfähige Material in einer Menge von 80 Gewichtsteilen oder mehr und 99,9 Gewichtsteilen oder weniger, bezogen auf 100 Gewichtsteile des leitfähigen Materials für eine Negativelektrode, umfasst ist.

2. Negativelektrode (100) gemäß Anspruch 1, worin die Keramik eine oder mehrere Verbindungen umfasst, ausgewählt aus der Gruppe, bestehend aus Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr,Ti)O₃ (PZT), (Pb,La)(Zr,Ti)O₃ (PLZT), Pb(Mg_{1/3}Nb_{2/3})O₃-PbTiO₃ (PMN-PT) und Hafnia (HfO₂).

3. Negativelektrode (100) gemäß Anspruch 1, worin die Keramikzusammensetzung ferner ein Lösungsmittel auf organischer Basis umfasst, und das Lösungsmittel auf organischer Basis eine oder mehrere Verbindungen umfasst, ausgewählt aus der Gruppe, bestehend aus N-Methylpyrrolidon (NMP), Dimethylformamid (DMF), Aceton und Dimethylacetamid.

4. Negativelektrode (100) gemäß Anspruch 1, worin die Haftung 6,538 N/m (10 gf/15 mm) oder mehr und 65,38 N/m (100 gf/15 mm) oder weniger beträgt, gemessen wie in der Beschreibung beschrieben, nachdem Lithiummetall an einer Oberfläche angehaftet wurde, die derjenigen Oberfläche der Keramikschicht (10) gegenüberliegt, welche mit der Schicht aus Aktivmaterial für eine Negativelektrode (20) in Kontakt gebracht wurde, und nachdem der resultierende Verbund anschließend für einen Zeitraum von 10 Sekunden bis 2 Minuten bei 23 °C stehen gelassen wurde.

5. Negativelektrode (100) gemäß Anspruch 1, worin die Zusammensetzung der Schicht aus Aktivmaterial für eine Negativelektrode ferner einen oder mehrere Bestandteile umfasst, die ausgewählt ist aus der Gruppe, bestehend aus einem Aktivmaterial auf Siliziumbasis und einem Bindemittel für eine Negativelektrode.

6. Negativelektrode (100) gemäß Anspruch 5, wobei das Aktivmaterial auf Siliziumbasis eine oder mehrere Verbindungen umfasst, die aus der Gruppe bestehend aus SiOx (x=0) und SiOx (0<x<2) ausgewählt sind, und wobei es 70 Gewichtsteile oder mehr des SiOx (x=0), bezogen auf 100 Gewichtsteile des Aktivmaterials auf Siliziumbasis, enthält.

7. Negativelektrode (100) gemäß Anspruch 5, worin das planare leitfähige Material in einer Menge von 95 Gewichtsteilen oder mehr und 99,9 Gewichtsteilen oder weniger, bezogen auf 100 Gewichtsteile des leitfähigen Materials der Negativelektrode, umfasst ist.

8. Negativelektrode (100) gemäß Anspruch 5, worin das auf Silizium basierende Aktivmaterial in einer Menge von 70 Gewichtsteilen oder mehr, bezogen auf 100 Gewichtsteile der Zusammensetzung der Aktivmaterialschicht der Negativelektrode, umfasst ist.

9. Verfahren zur Herstellung der Negativelektrode (100) für eine Lithium-Sekundärbatterie gemäß den Ansprüchen 1-8, wobei das Verfahren umfasst:
das Bereitstellen einer Stromabnehmerschicht (30) für eine Negativelektrode;
das Bilden einer Aktivmaterialschicht (20) der Negativelektrode durch Aufbringen einer Zusammensetzung für die Aktivmaterialschicht der Negativelektrode auf eine Oberfläche oder beide Oberflächen der Stromabnehmerschicht (30) der Negativelektrode; und
das Bilden einer Keramikschicht (10) durch Aufbringen einer Zusammensetzung für die Keramikschicht auf eine Oberfläche, die derjenigen Oberfläche der Aktivmaterialschicht (20) der Negativelektrode gegenüberliegt, welche mit der Stromabnehmerschicht (30) der Negativelektrode in Kontakt steht,
**dadurch gekennzeichnet, dass**:
eine Dicke der Keramikschicht (10) 0,5 µm oder mehr und 3 µm oder weniger beträgt,
die Zusammensetzung der Keramikschicht Keramik, ein Bindemittel auf organischer Basis und ein Lösungsmittel auf organischer Basis umfasst, worin das Bindemittel auf organischer Basis Polyvinylidenfluorid (PVdF) oder Polyvinylidenfluorid-Hexafluorpropylen (PVdF-HFP) ist, und
die Keramik und das Bindemittel auf organischer Basis in einer Menge von 80 Gewichtsteilen oder mehr und 95 Gewichtsteilen oder weniger beziehungsweise 5 Gewichtsteilen oder mehr und 20 Gewichtsteilen oder weniger, bezogen auf 100 Gewichtsteile der Zusammensetzung der Keramikschicht, umfasst sind, und
worin die auf Silizium basierende Aktivmaterialschicht (20) der Negativelektrode eine Zusammensetzung für die Aktivmaterialschicht der Negativelektrode umfasst,
die Zusammensetzung für die Aktivmaterialschicht der Negativelektrode ein leitfähiges Material der Negativelektrode umfasst, welches ein planares leitfähiges Material beinhaltet; und ein lineares leitfähiges Material, und
das planare leitfähige Material ist in einer Menge von 80 Gewichtsteilen oder mehr und 99,9 Gewichtsteilen oder weniger, bezogen auf 100 Gewichtsteile des leitfähigen Materials der negativen Elektrode, enthalten.

10. Verfahren gemäß Anspruch 9, umfassend das Aufbringen der Zusammensetzung für die Keramikschicht und anschließend das Trocknen des Lösungsmittels auf organischer Basis in der Zusammensetzung für die Keramikschicht durch Trocknen und Walzpressen.

11. Verfahren gemäß Anspruch 9, umfassend das Unterziehen einer Negativelektrode (100), bei der eine Aktivmaterialschicht für eine Negativelektrode (20) und eine Keramikschicht (10) auf dem Stromabnehmer für eine Negativelektrode ausgebildet sind, einer Prelithiierung,
wobei das Unterziehen für die Negativelektrode (100) einer Prelithiierung Folgendes umfasst: einen Lithium-Galvanisierungsprozess, einen Lithiummetall-Übertragungsprozess, einen Lithiummetall-Abscheidungsprozess oder einen Beschichtungsprozess mit stabilisiertem Lithiummetallpulver (SLMP).

12. Lithium-Sekundärbatterie, umfassend: eine positive Elektrode;
die Negativelektrode (100) für eine Lithium-Sekundärbatterie gemäß einem der Ansprüche 1 bis 8;
einen zwischen der positiven Elektrode und der negativen Elektrode (100) angeordneten Separator; und
einen Elektrolyten.

## Revendications

1. Électrode négative (100) pour un accumulateur au lithium, comprenant : une couche (30) de collecteur de courant d'électrode négative ; une couche (20) de matériau actif d'électrode négative à base de silicium disposée sur une surface ou les deux surfaces de la couche (30) de collecteur de courant d'électrode négative ; et une couche céramique (10) disposée sur une surface opposée à une surface de la couche (20) de matériau actif d'électrode négative à base de silicium mise en contact avec la couche (30) de collecteur de courant d'électrode négative,
dans laquelle la couche céramique (10) comprend une composition de couche céramique ou un produit séché de celle-ci,
**caractérisée en ce que** :
une épaisseur de la couche céramique (10) est de 0,5 µm ou plus et de 3 µm ou moins,
la composition de couche céramique comprend une céramique et un liant organique, dans laquelle le liant organique est du fluorure de polyvinylidène (PVdF) ; ou du fluorure de polyvinylidène-hexafluoropropylène (PVdF-HFP),
la céramique et le liant organique sont compris en une quantité de 80 parties en poids ou plus et de 95 parties en poids ou moins et de 5 parties en poids ou plus et de 20 parties en poids ou moins, respectivement, sur la base de 100 parties en poids de la composition de couche céramique, et
dans laquelle la couche (20) de matériau actif d'électrode négative à base de silicium comprend une composition de couche de matériau actif d'électrode négative,
la composition de couche de matériau actif d'électrode négative comprend un matériau conducteur d'électrode négative comprenant un matériau conducteur planaire ; et un matériau conducteur linéaire, et
le matériau conducteur planaire est compris en une quantité de 80 parties en poids ou plus et de 99,9 parties en poids ou moins sur la base de 100 parties en poids du matériau conducteur d'électrode négative.

2. Électrode négative (100) selon la revendication 1, dans laquelle la céramique comprend un ou plusieurs éléments sélectionnés dans le groupe consistant en Al₂O₃, ZrO₂, SiO₂, TiO₂, ZnO, BaTiO₃, SrTiO₃, CaCO₃, CaO, CeO₂, NiO, MgO, SnO₂, Y₂O₃, Pb(Zr,Ti)O₃ (PZT), (Pb,La) (Zr, Ti)O₃ (PLZT), Pb(Mg_{1/3}Nb_{2/3})O₃-PbTiO₃ (PMN-PT) et l'oxyde d'hafnium (HfO₂).

3. Électrode négative (100) selon la revendication 1, dans laquelle la composition céramique comprend en outre un solvant organique, et
le solvant organique comprend un ou plusieurs éléments sélectionnés dans le groupe consistant en la N-méthyl pyrrolidone (NMP) ; le diméthylformamide (DMF) ; l'acétone ; et le diméthylacétamide.

4. Électrode négative (100) selon la revendication 1, dans laquelle la force d'adhérence est de 6,538 N/m (10 gf/15 mm) ou plus et de 65,38 N/m (100 gf/15 mm)
ou moins,
mesurée comme décrit dans la description, après avoir fait adhérer du lithium métallique à une surface opposée à une surface de la couche céramique (10) mise en contact avec la couche (20) de matériau actif d'électrode négative, puis avoir laissé la partie adhérée résultante au repos à 23 °C pendant 10 secondes à 2 minutes.

5. Électrode négative (100) selon la revendication 1, dans laquelle la composition de couche de matériau actif d'électrode négative comprend en outre un ou plusieurs éléments sélectionnés dans le groupe consistant en un matériau actif à base de silicium ; et un liant d'électrode négative.

6. Électrode négative (100) selon la revendication 5, dans laquelle le matériau actif à base de silicium comprend un ou plusieurs éléments sélectionnés dans le groupe consistant en SiOx (x=0) et SiOx (0<x<2), et comprend 70 parties en poids ou plus du SiOx (x=0) sur la base de 100 parties en poids du matériau actif à base de silicium.

7. Électrode négative (100) selon la revendication 5, dans laquelle le matériau conducteur planaire est compris en une quantité de 95 parties en poids ou plus et de 99,9 parties en poids ou moins sur la base de 100 parties en poids du matériau conducteur d'électrode négative.

8. Électrode négative (100) selon la revendication 5, dans laquelle le matériau actif à base de silicium est compris en une quantité de 70 parties en poids ou plus sur la base de 100 parties en poids de la composition de couche de matériau actif d'électrode négative.

9. Procédé de fabrication de l'électrode négative (100) pour un accumulateur au lithium selon les revendications 1 à 8, le procédé comprenant : la préparation d'une couche (30) de collecteur de courant d'électrode négative ;
la formation d'une couche (20) de matériau actif d'électrode négative par application d'une composition de couche de matériau actif d'électrode négative sur une surface ou les deux surfaces de la couche (30) de collecteur de courant d'électrode négative ; et
la formation d'une couche céramique (10) par application d'une composition de couche céramique sur une surface opposée à une surface de la couche (20) de matériau actif d'électrode négative mise en contact avec la couche (30) de collecteur de courant d'électrode négative,
**caractérisé en ce que** :
une épaisseur de la couche céramique (10) est de 0,5 µm ou plus et de 3 µm ou moins,
la composition de couche céramique comprend une céramique, un liant organique et un solvant organique, dans lequel le liant organique est du fluorure de polyvinylidène (PVdF) ; ou du fluorure de polyvinylidène-hexafluoropropylène (PVdF-HFP), et
la céramique et le liant organique sont compris en une quantité de 80 parties en poids ou plus et de 95 parties en poids ou moins et de 5 parties en poids ou plus et de 20 parties en poids ou moins, respectivement, sur la base de 100 parties en poids de la composition de couche céramique, et
dans lequel la couche (20) de matériau actif d'électrode négative à base de silicium comprend une composition de couche de matériau actif d'électrode négative,
la composition de couche de matériau actif d'électrode négative comprend un matériau conducteur d'électrode négative comprenant un matériau conducteur planaire ; et un matériau conducteur linéaire, et
le matériau conducteur planaire est compris en une quantité de 80 parties en poids ou plus et de 99,9 parties en poids ou moins sur la base de 100 parties en poids du matériau conducteur d'électrode négative.

10. Procédé selon la revendication 9, comprenant l'application de la composition de couche céramique, puis le séchage du solvant organique dans la composition de couche céramique par séchage et pressage au rouleau.

11. Procédé selon la revendication 9, comprenant la soumission à une pré-lithiation d'une électrode négative (100) dans laquelle une couche (20) de matériau actif d'électrode négative et une couche céramique (10) sont formées sur le collecteur de courant d'électrode négative,
dans lequel la soumission de l'électrode négative (100) à la pré-lithiation comprend : un processus d'électrodéposition de lithium ; un processus de transfert de lithium métallique ; un processus de dépôt de lithium métallique ; ou un processus de revêtement au moyen de poudre de lithium métallique stabilisé (SLMP).

12. Accumulateur au lithium comprenant : une électrode positive ;
l'électrode négative (100) pour un accumulateur au lithium selon l'une quelconque des revendications 1 à 8 ;
un séparateur disposé entre l'électrode positive et l'électrode négative (100) ; et
un électrolyte.
